# EUROPÄISCHE PATENTANMELDUNG

(11) **EP 0 999 179 A2**
(43) Veröffentlichungstag der Anmeldung: **10.05.2000**
(21) Anmeldenummer: 99117774.2
(22) Anmeldetag: 09.09.1999
(51) Int. Cl.: C01B 7/07

(54) **Verfahren zur Herstellung von Salzsäuren mit Konzentrationen über der Konzentration des Wasser/HCL-Azeotrops**

(30) Priorität: 02.11.1998 DE 19850398
(71) Anmelder: Infracor GmbH, 45764 Marl (DE)
(72) Erfinder: Kuppinger, Franz-Felix, Dr., 45768 Marl (DE)

(57) **Zusammenfassung**

Zur Herstellung von Säuren, z.B. Salzsäure, mit einer Konzentration über der Konzentration des Wasser/Säure-Azeotrops sind bisher relativ aufwendige Verfahren eingesetzt worden um das Azeotrop zu brechen. Dabei wurden den Säuren häufig Stoffe als Schleppmittel zugesetzt, die nach dem Brechen des Azeotrops wieder aufwendig aus der Säure entfernt werden mußten.

Die vorliegende Erfindung betrifft deshalb eine Verfahren zur Herstellung von Säuren, vorzugsweise Salzsäure, mit einer Konzentration über der Konzentration des Wasser/Säure-Azeotrops. Dabei bedient sich dieses Verfahren der Elektrodialyse.

Durch Einsatz des erfindungsgemäßen Verfahrens kann bei der Herstellung von Säuren mit einer Konzentration über der Konzentration des Wasser/Säure-Azeotrops auf den Einsatz von Schleppmitteln verzichtet werden.

## Beschreibung

Die vorliegende Erfindung betrifft ein Verfahren zur Herstellung von Salzsäuren mit Konzentrationen über der Konzentration des Wasser/HCl-Azeotrops.

Salzsäure ist eine nicht nur in der chemischen Industrie häufig eingesetzte Chemikalie. Zum Beispiel wird Salzsäure zum Aufschluß von Rohphosphat und anderen Erzen, zur Säurebehandlung von Erdöl- u. Erdgasquellen, zur Metallbearbeitung durch Beizen, Ätzen u. Löten (Auflösung störender Oxid-Schichten), in der Galvanik, zur Kesselsteinbeseitigung, zur Regeneration von Ionenaustauschern zur Herstellung von Chlordioxid und zur Bildung löslicher Salze mit Alkaloiden, Anilin und dergleichen sowie zur Neutralisation von alkalischen Abfallstoffen verwendet. Weiterhin findet Salzsäure Verwendung bei der Holzverzuckerung und Glucose-Gewinnung, zur Auflösung von Knochensubstanz bei der Knochenleimgewinnung, bei Farbstoff-Synthesen, als Zusatz zu Fällbädern in der Chemiefaser-Industrie, zum Entkälken u. Pickeln in der Gerberei und zum Aufschließen tierischer und pflanzlicher Eiweiße (Römpp Chemielexikon, Thieme Verlag).

Bei diesen Anwendungen der Salzsäure fallen verdünnte, oftmals verunreinigte Salzsäuren an. Diese Salzsäure könnte, z.B. nach einem Reinigungsschritt wiederverwendet werden. Häufig ist es oft notwendig, daß die Salzsäure wieder als konzentrierte Salzsäure vorliegt.

Ein Aufkonzentrieren von Salzsäure auf eine Konzentration über die Azeotrop-Konzentration von 20,17 Gew.-% bei 1013 mbar ist durch thermisches Behandeln wie z.B. Rektifizieren oder Destillieren, nicht ohne den Einsatz von Hilfsstoffen möglich, da das Phasensystem Wasser/HCl ein Minimumazeotrop (bezogen auf den Druck) aufweist.

Häufig wird zum Durchbrechen des Azeotrops Schwefelsäure als Hilfsstoff der Salzsäure zugegeben. Dieser Hilfsstoff muß allerdings, nach Durchbrechen des Azeotrops und vor oder nach dem weiteren Aufkonzentrieren der Salzsäure, durch Destillation oder andere geeignete Verfahren wieder relativ aufwendig entfernt werden.

Aus der Literatur (Robbins et al, Journal of Membrane Science, 118 (1996) 101-110) sind Untersuchungen zur elektrolytischen Salpetersäurekonzentrierung bis zu 10 mol/l bekannt, wobei die Säure direkt im Anodenkreislauf konzentriert wurde. Eine solche Verfahrensweise ist für die Konzentration von Salzsäure nicht möglich, da an der Anode Chlor entstehen würde.

S. Mazrou et al, Journal of Applied Electrochemistry 27 (1997) 558-567, beschreiben ein Verfahren zur Herstellung von Salzsäure und Natronlauge aus Natriumchlorid. Mit diesem Verfahren lassen sich Salzsäuren mit einer Konzentration von maximal 2 mol/l herstellen.

Der Erfindung liegt daher die Aufgabe zugrunde, ein einfaches Verfahren zur Herstellung von Salzsäuren mit Konzentrationen über der Konzentration des Wasser/HCl-Azeotrops bereitzustellen, welches ohne Zugabe von Hilfsstoffen auskommt und somit keine Verfahrensschritte benötigt, bei welchen die Hilfsstoffe wieder entfernt werden müssen.

Es wurde nun überraschenderweise gefunden, daß die Herstellung von Salzäuren mit Konzentrationen über der Konzentration des Wasser/HCl-Azeotrops durch elektrodialytisches Konzentrieren wesentlich vereinfacht wird und auf den Zusatz von Hilfsstoffen verzichtet werden kann.

Gegenstand der vorliegenden Erfindung ist daher ein Verfahren zur Herstellung von Salzsäuren mit Konzentrationen über der Konzentration des Wasser/HCl-Azeotrops, das dadurch gekennzeichnet ist, daß das Konzentrieren der Salzsäure durch zumindest einen elektrodialytischen Schritt erfolgt.

Mit Hilfe des erfindungsgemäßen Verfahrens können überraschend einfach aus verdünnten Salzsäuren, Salzsäuren mit Konzentrationen über der Konzentration des Wasser/HCl Azeotrops erhalten werden. Dadurch, daß das erfindungsgemäße Verfahren auf den Einsatz von Hilfsstoffen zumindest in der Weise verzichtet, daß keine Hilfsstoffe zur verdünnten Salzsäure hinzugegeben werden müssen, vereinfacht sich das Verfahren zur Herstellung von Salzsäuren mit Konzentrationen über der Konzentration des Wasser/HCl Azeotrops beträchtlich, da aufwendige Zwischenschritte zum Entfernen der Hilfsstoffe entfallen.

Das erfindungsgemäße Verfahren zur Herstellung von Salzsäuren mit Konzentrationen über der Konzentration des Wasser/HCl-Azeotrops bedient sich zumindest eines elektrodialytischen Schrittes.

Bei dem erfindungsgemäßen Verfahren wird in zumindest einer Elektrodialysezelle, welche durch zumindest eine Kationenaustauschermembran und zumindest eine Anionenaustauschermembran in zumindest drei Kammern unterteilt ist, eine Säure mit einer Konzentration von 0,01 bis 20 Gew.-%, bevorzugt eine mineralische Säure, besonders bevorzugt Schwefelsäure in der Anodenkammer, welche vorzugsweise in einen Vorlagekreislauf eingebunden ist, vorgelegt. In der an die Anodenkammer angrenzenden mittleren Kammer, die von der Anodenkammer durch eine Kationenaustauschermembran getrennt ist und von der anschließenden Kathodenkammer durch eine Anionenaustauschermembran getrennt ist, wird die zu konzentrierende Säure, vorzugsweise Salzsäure vorgelegt. Auch diese Kammer wird vorzugsweise in einen Vorlage-Kreislauf eingebunden. In der Kathodenkammer, welche von der mittleren Kammer durch eine Anionenaustauschermembran abgetrennt wird und die ebenfalls vorzugsweise in einen Vorlagekreislauf eingebunden ist, wird eine Lösung, welche Chloridionen enthält, vorzugsweise Salzsäure, vorgelegt. Vorzugsweise kann eine Anionenaustauschermembran verwendet werden, die Protonentransport vermindernde Eigenschaften aufweist, wie z.B. die Anionenaustauschermembranen ACM, der Firma Tokuyama Soda Ltd. oder ARA, der Firma Solvay.

Durch Anlegen einer Spannung und eines Stromes, wobei Spannung und Strom so gewählt werden, daß die resultierenden Stromdichten von 50 bis 150 mA/cm² betragen, wandern aus dem Anodenkreis H⁺-Ionen durch die Kationenaustauschermembran in die mittlere Kammer, welche die zu konzentrierende Säure enthält. Aus dem Kathodenkreis wandern Chloridionen durch die Anionenaustauschermembran in die, die zu konzentrierende Säure führende mittlere Kammer.

Zum Erreichen einer Konzentration der Säure, vorzugsweise Salzsäure, über der Konzentration des Wasser/Säure-Azeotrops mit dem erfindungsgemäßen Verfahren ist es vorteilhaft, wenn die in der mittleren Kammer vorgelegte zu konzentrierende Säure eine Konzentration aufweist, die nicht wesentlich unter der Konzentration des Wasser/Säure-Azeotrops liegt. Handelt es sich bei der zu konzentrierenden Säure um Salzsäure, so weist diese vorzugsweise eine Konzentration von 8 Gew.-% bis 20,17 Gew.-%, besonders bevorzugt eine Konzentration von 12 Gew.-% bis 20,17 Gew.%, auf. Es ist außerdem vorteilhaft, wenn die im Kathodenkreislauf vorhandene, Chloridionen abgebende Lösung auf einem hohen Konzentrationsniveau gehalten wird. Ebenso ist es vorteilhaft, die Säure, vorzugsweise Schwefelsäure, im Anodenkreislauf ständig nachzuführen, um den Konzentrationsunterschied zwischen zu konzentrierender Säure in der mittleren Kammer und der Säure in der Anodenkammer gering zu halten. Dabei kann soviel Säure nachgeführt werden, daß die Säurekonzentration entsprechend der Anfangskonzentration in der Anodenkammer gehalten wird, oder daß der Konzentrationsunterschied zwischen den Lösungen in der Anodenkammer und in der die zu konzentrierende Säure führenden Kammer gleich bleibt, was einem Anstieg der Säurekonzentration in der Anodenkammer während der Elektrodialyse entspricht.

Die möglichst geringen Konzentrationsunterschiede zwischen Anoden-, Kathodenkammer und mittlerer Kammer sind notwendig, da mit steigendem Konzentrationsunterschied zwischen den Kammern ein immer größer werdender Wassertransport in die mittlere Kammer, erzeugt durch Elektroosmose, stattfindet, der die Konzentration in der mittleren Kammer durch Verdünnung wieder senkt. Zusätzlich bedingen große Konzentrationsunterschiede zwischen der mittleren Kammer und der Anoden- bzw. Kathodenkammer bzw. der Abgeber- und Aufnehmerkammer eine verstärkte Rückdiffusion in den Membranen. Außerdem verringert sich der selektive Transport von Kationen in der Kationenaustauschermembran bzw. der Anionen in der Anionenaustauschermembran.

In einer besonderen Ausführungsart des erfindungsgemäßen Verfahrens wird die Anzahl der Kammern in der Elektrodialysezelle in der Art erhöht, daß zusätzlich zumindest je eine Kationenaustauschermembran und eine Anionenaustauschermembran in die Elektrodialysezelle eingebracht wird. Durch den Einbau von jeweils einer Kationenaustauschermembran und einer Anionenaustauschermembran erhöht sich die Anzahl der Kammern in der Elektrodialysezelle um jeweils zwei Kammern. Eine Elektrodialysezelle, welche um jeweils drei Kationen- und Anionenaustauschermembranen erweitert wird, besitzt somit neun Kammern. In den neun Kammern, wird in der Anodenkammer wiederum die Säure, vorzugsweise Schwefelsäure, vorgelegt. Von dieser Kammer ist die nächste Kammer durch eine Kationenaustauschermembran getrennt. In dieser Kammer wird die zu konzentrierende Säure vorgelegt. Durch eine Anionenaustauschermembran ist diese Kammer von der nächsten Kammer getrennt, in welcher die Chloridionen enthaltende Lösung vorgelegt wird. Es folgen noch weitere fünf Kammern, in denen jeweils abwechselnd die zu konzentrierende Säure und die Chioridionen enthaltende Lösung vorgelegt werden und welche abwechselnd von einer Kationen- bzw. Anionenaustauschermembran von der vorherigen Kammer getrennt sind. Als letzte Kammer schließt sich die Kathodenkammer an, welche durch eine Anionaustauschermembran von der die zu konzentrierende Säure führenden Kammer getrennt ist und in welcher eine Chloridionen enthaltende Lösung vorgelegt wird.

Zur Vermeidung des Wassertransportes durch die Kationenaustauschermembran werden in einer weiteren besonderen Ausführungsart des erfindungsgemäßen Verfahrens die Kationenaustauschermembranen durch bipolare Membranen ersetzt. Die Elektrodialysezelle weist zumindest eine Anionenaustauschermembran und zumindest eine bipolare Membran und somit wiederum zumindest drei Kammern auf. In der Anodenkammer, die vorzugsweise in einen Vorlage-Kreislauf eingebunden ist, wird wiederum eine Säure mit einer Konzentration von 0,01 bis 20 Gew.-%, vorzugsweise Schwefelsäure, vorgelegt. Die Anodenkammer ist durch eine bipolare Membran von der zweiten Kammer, in welcher die zu konzentrierende Säure im Kreis vorgelegt wird, getrennt. Diese Kammer, die vorzugsweise in einen Vortage-Kreislauf eingebunden ist, ist von der Kathodenkammer, in welcher die Chioridionen enthaltende Lösung vorgelegt wird, durch eine Anionenaustauschermembran getrennt. Die Kathodenkammer ist ebenfalls vorzugsweise in einen Vorlage-Kreislauf eingebunden.

Zur Steigerung der Kapazität des Verfahrens kann es vorteilhaft sein, die Elektrodialysezelle in der Art zu erweitern, daß durch Einfügen von zumindest jeweils einer bipolaren Membran und einer Anionenaustauschermembran die Anzahl der Kammern erweitert wird. Durch Hinzufügen von jeweils einer bipolaren Membran und einer Anionenaustauschermembran entstehen beispielsweise insgesamt 5 Kammern, wobei in der Anodenkammer eine Säure, vorzugsweise Schwefelsäure vorgelegt wird, diese Kammer durch eine bipolaren Membran von einer Kammer, in welcher die zu konzentrierende Säure vorgelegt wird, diese Kammer durch eine Anionenaustauschermembran von einer Kammer, in der die Chloridionen enthaltende Lösung vorgelgt wird, diese Kammer wiederum durch eine bipolare Membran von einer Kammer, in der die zu konzentrierende Säure vorgelegt wird und diese von der Kathodenkammer durch eine Anionenaustauschermembran getrennt ist.

Durch Anlegen einer Spannung und eines Stromes, wobei Spannung und Strom so gewählt werden, daß die resultierenden Stromdichten von 50 bis 150 mA/cm² betragen, wandern aus dem Anodenkreis H⁺-Ionen, welche durch Wasserspaltung in der bipolaren Membran entstanden sind, in die Kammer, in welcher die zu konzentrierende Säure vorgelgt wird. Aus der Chloridionen enthaltenden Lösung spaltet sich ebenfalls Wasser an der bipolaren Membran in OH⁻- und H⁺-Ionen auf Die H⁺-Ionen wandern in die die zu konzentrierende Säure enthaltende Kammer, während die OH⁻-Ionen zurück in die Chloridionen enthaltende Lösung führende Kammer wandern. Aus dem Kathodenkreis, welcher die Chloridionen enthaltende Lösung führt, wandern Chloridionen durch die Anionenaustauschermembran in die die zu konzentrierende Säure enthaltende Kammer.

Durch den Einsatz von bipolaren Membranen wird vermieden, daß Wasser durch Elektroosmose aus den die Chloridionen enthaltende Lösung führenden Kammern in die Kammern, in welcher die zu konzentrierende Säure geführt wird wandern, da das Wasser in der bipolaren Membran in OH⁻-Ionen und H⁺-Ionen gespalten wird. Die OH⁻-Ionen verbleiben in der Chloridionen haltigen Lösung, während die H⁺-Ionen in die Kammer mit der zu konzentrierenden Säure abgegeben werden.

Wird als Säure im Anodenkreis Schwefelsäure verwendet, kann es, je nach verwendeter bipolarer Membran, vorkommen, daß diese, vermutlich aufgrund der unterschiedlichen Wertigkeit der Säuren (Salzsäure ist eine einwertige Säure und Schwefelsäure ist eine zweiwertige Säure), zerstört wird.

Zur Vermeidung der Zerstörung der bipolaren Membran werden in einer weiteren besonderen Ausführungsart des erfindungsgemäßen Verfahrens zumindest eine bipolare Membran, zumindest eine Anionenaustauschermembran und zumindest eine Kationenaustauschermembran so in die Elektrodialysezelle eingebaut, daß die Elektrodialysezelle zumindest vier Kammern aufweist. In der Anodenkammer wird wiederum eine Säure, vorzugsweise Schwefelsäure, vorgelegt. Die Anodenkammer ist durch eine Kationenaustauschermembran von der zweiten Kammer, in welcher eine Chloridionen enthaltende Lösung, vorzugsweise Salzsäure vorgelegt wird, getrennt. In der an diese Kammer anschließende Kammer, welche von der die Chloridionen haltige Lösung enthaltenden Kammer durch eine bipolare Membran getrennt ist, wird die zu konzentrierende Säure, vorzugsweise Salzsäure, vorgelegt. Diese Kammer ist von der Kathodenkammer, in welcher ebenfalls die Chloridionen enthaltende Lösung vorgelegt wird, durch eine Anionenaustauschermembran getrennt.

Zur Steigerung der Kapazität des Verfahrens kann es vorteilhaft sein, die Elektrodialysezelle in der Art zu erweitern, daß durch Einfügen von zumindest jeweils einer bipolaren Membran und einer Anionenaustauschermembran die Anzahl der Kammern erweitert wird. Durch Hinzufügen von jeweils einer bipolaren Membran und einer Anionenaustauschermembran entstehen beispielsweise insgesamt 6 Kammern, wobei in der Anodenkammer eine Säure, vorzugsweise Schwefelsäure vorgelegt wird, diese durch eine Kationenaustauschermembran von einer Kammer in welcher die Chloridionen enthaltende Lösung vorgelegt wird, diese Kammer durch eine bipolaren Membran von einer Kammer, in welcher die zu konzentrierende Säure vorgelegt wird, diese Kammer durch eine Anionenaustauschermembran von einer Kammer, in der die Chloridionen enthaltende Lösung vorgelegt wird, diese Kammer wiederum durch eine bipolare Membran von einer Kammer, in der die zu konzentrierende Säure vorgelegt wird und diese Kammer von der Kathodenkammer durch eine Anionenaustauschermembran getrennt ist. Durch weiteres einmaliges, zweimaliges oder mehrmaliges Hinzufügen von jeweils einer bipolaren Membran und einer Anionenaustauschermembran kann die Elektrodialysezelle um weitere zwei, vier oder mehr Kammern erweitert werden.

Die Kathodenkammer muß nicht unbedingt die Chloridionen enthaltende Lösung enthalten sondern kann prinzipiell auch die zu konzentrierende Säure enthalten. Bei einer solchen Anordnung wird die Säure in der Kathodenkammer jedoch nicht aufkonzentriert sondern neutralisiert. Das Konzentrieren der Säure findet somit nur in den die zu konzentrierende Säure enthaltenden Kammern der Elektrodialysezelle und nicht in der Kathodenkammer statt. Da die Stromausbeute bei einer solchen Anordnung geringer ist, wird das Verfahren vorzugsweise aber so eingesetzt, daß die Kathodenkammer die Chloridionen haltige Lösung aufweist.

Durch Anlegen einer Spannung und eines Stromes, wobei Spannung und Strom vorzugsweise so gewählt werden, daß die resultierenden Stromdichten von 50 bis 150 mA/cm² betragen, wandern aus dem Anodenkreis H⁺-Ionen durch die Kationenaustauschermembran in die Kammer, welche die Chloridionen enthaltende Lösung führt. Aus den Kammern, in welcher die Chloridionen enthaltende Lösung vorgelegt wird, wandern die Chloridionen durch die Anionenaustauschermembran in die Kammer, welche die zu konzentrierende Säure enthält. Gleichzeitig spaltet sich Wasser an der bipolaren Membran in OH⁻- und H⁺-Ionen auf. Die H⁺-Ionen wandern in die die zu konzentrierende Säure enthaltende Kammer, während die OH⁻-Ionen zurück in die Chloridionen enthaltende Lösung führende Kammer wandern. Aus dem Kathodenkreis, in welchem die Chloridionen enthaltende Lösung vorgelegt wird, wandern Chloridionen durch die Anionenaustauschermembran in die die zu konzentrierende Säure führende Kammer.

Durch den Einsatz von bipolaren Membranen wird vermieden, daß Wasser durch Elektroosmose aus den die Chloridionen enthaltende Lösung führenden Kammern in die Kammern, in welcher die zu konzentrierende Säure geführt wird wandern, da das Wasser in der bipolaren Membran in OH⁻-Ionen und H⁺-Ionen gespalten wird. Die OH⁻-Ionen verbleiben in der Chloridionen haltigen Lösung und werden von den dortigen H⁺-Ionen neutralisiert, während die H⁺-Ionen in die Kammer mit der zu konzentrierenden Säure abgegeben werden. Durch die zusätzliche Verwendung zumindest einer Kationenaustauschermembran, entsteht eine zusätzliche Kammer, in der die Chloridionen enthaltende Lösung geführt wird. Diese zusätzliche Kammer ermöglicht es, daß der direkte Kontakt der Schwefelsäure mit der bipolaren Membran vermieden wird, so daß eine Zerstörung der bipolaren Membran verhindert werden kann.

Erfindungsgemäß kann es auch bei dieser Ausführungsart des erfindungsgemäßen Verfahrens vorteilhaft sein, die Kammern in zumindest einen Vorlage-Kreislauf einzubinden.

Erfindungsgemäß können als Membranen handelsübliche Membranen eingesetzt werden. Es können als Anionenaustauschermembranen vorzugsweise solche eingesetzt werden, die eine geringe Durchlässigkeit für Protonen aufweisen wie z.B. die Membranen ARA 17/10 (Morgane, Frankreich) oder ACM (Tokuyama Soda, Japan). Besonders bevorzugt wird die Membran ACM eingesetzt. Als Kationenaustauschermembranen eignen sich für das erfindungsgemäße Verfahren ebenfalls alle handelsüblichen Kationenaustauschermembranen, wie z.B. CMV Selemion (Asahi Glass, Japan) oder C66 10F (Tokuyama Soda). Besonders bevorzugt wird die Membran C66 10F eingesetzt. Als bipolare Membran kann für das erfindungsgemäße Verfahren zum Beispiel die Membran BP1 (Tokuyama Soda, Japan) eingesetzt werden.

Die erfindungsgemäß eingesetzte, Chloridionen enthaltende Lösung kann eine Salzlösung oder eine verdünnte und/oder verunreinigte Salzsäure, vorzugsweise eine Salzsäure sein, die vorzugsweise eine Konzentration von 0,01 Gew.-% bis 20,17 Gew.-%, besonders bevorzugt eine Konzentration von 15 Gew.-% bis 20,17 Gew.-%, HCl aufweist.

Die zu konzentrierende Säure, die auch als HCl aufnehmende Lösung bezeichnet werden kann, kann eine Salzsäure sein, die eine Konzentration an HCl von 0,5 bis 20,17 Gew.-%, besonders bevorzugt eine Konzentration an HCl von 12 bis 20,17 Gew.-% aufweist.

Für das erfindungsgemäße Verfahren können handelsübliche Anoden eingesetzt werden, die z.B. aus Platinmohr, Titan, Graphit, Mischoxid, reinem Platin oder einer Kombination dieser Bestandteile, aufgetragen auf oder eingebracht in ein Trägermaterial, vorzugsweise aus Titan mit Mischoxidüberzug bestehen. Als Anoden können aber auch solche verwendet werden, die bei der Bildung von Chlorgas nicht zerstört werden. Als Kathoden können für das erfindungsgemäße Verfahren solche eingesetzt werden, die aus gängigen und zur Verfügung stehenden Materialien, wie z.B. aus Platinmohr, Stahl, Edelstahl, VA-Stahl, Graphit, Mischoxid, reinem Platin oder einer Kombination dieser Bestandteile, aufgetragen auf oder eingebracht in ein Trägermaterial, vorzugsweise aus VA-Stahl in Flach-, Lochplatten- oder Streckmetallausführung bestehen.

In einer weiteren besonderen Ausführungsart des erfindungsgemäßen Verfahrens wird zum Erhalt von konzentrierten Säuren, vorzugsweise konzentrierter Salzsäure nach der erfindungsgemäßen Konzentration durch zumindest einen elektrodialytischen Schritt eine thermische Behandlung der zu konzentrierenden Säure durchgeführt. Diese thermische Behandlung kann z.B. eine Destillation oder Rektifikation sein.

Eine weitere Ausführungsart des erfindungsgemäßen Verfahrens ermöglicht die Herstellung von konzentrierten Säuren, vorzugsweise Salzsäure, dadurch, daß Säure mit einer Konzentration von 0,1 bis 10 Gew.-%, also Dünnsäure oder verdünnte Säure, die somit eine Konzentration an Säure kleiner der Wasser/Säure-Azeotop-Konzentration aufweist, durch Destillation, Rektifikation oder ähnliche Verfahren bis zur Azeotrop-Konzentration aufkonzentriert wird. Diese Säure wird durch eine weitere erfindungsgemäße Elektrodialyse auf eine Konzentration, die über der Azeotrop-Konzentration liegt, gebracht. Durch einen weiteren Destillations- oder Rektifikationsschritt ist es dann möglich, die Säure mit einer Konzentration größer der Azeotropkonzentration bis zur konzentrierten Säure aufzukonzentrieren. Bei der verdünnten Säure bzw. der Dünnsäure kann es sich auch um eine verunreinigte Säure handeln.

In einer weiteren besonderen Ausführungsart kann verunreinigte oder verdünnte Salzsäure durch eine erfindungsgemäße Elektrodialyse auf eine Konzentration unterhalb der Azeotrop-Konzentration aufkonzentriert werden, und anschließend durch eine weitere erfindungsgemäße Elektrodialyse auf eine Konzentration über der Azeotrop-Konzentration aufkonzentriert werden. Diese Säure kann dann durch eine thermische Behandlung, wie z. B. eine Destillation oder Rektifikation, bis zur konzentrierten Säure aufkonzentriert werden.

In einer weiteren besonderen Ausführungsart des erfindungsgemäßen Verfährens kann es vorteilhaft sein, zwei erfindungsgemäße Elektrodialysezellen in der Weise zu kombinieren, daß beide Elektrodialysezellen aus einer Vorlage gespeist werden. Diese gemeinsame Vorlage speist in einer ersten Elektrodialysezelle die Kammern, in welchen die zu konzentrierende Säure vorgelegt wird, und in einer zweiten Elektrodialysezelle die Kammern, in denen die Chloridionen enthaltende Lösung vorgelegt wird.

Bei den erfindungsgemäßen Verfahren zur Herstellung von konzentrierten Säuren, vorzugsweise konzentrierter Salzsäure, mittels Elektrodialyse und anschließender thermischer Behandlung, kann es vorteilhaft sein, die bei der Destillation bzw. Rektifikation aus dem Sumpf der Kolonne abgezogene Säure, die die Azeotropkonzentration aufweist, in den die zu konzentrierende Säure führenden Kreislauf der erfindungsgemäßen Elektrodialyse zurückzuführen.

Es kann vorteilhaft sein, die Kammern in der Elektrodialysezelle in einen Vorlage-Kreislauf einzubinden. Weiterhin kann es vorteilhaft sein, Kammern, in denen gleiche Lösungen vorgelegt werden sollen, aus einer Vorlage zu speisen. Die Verteilung der Lösung auf die einzelnen Kammern kann durch Regelarmaturen, wie z.B. Hähne oder Schieber, vorgenommen werden.

Die Kammern der Elektrodialysezelle aus den Vorlagen können so gespeist werden, daß die Strömungsrichtung der Lösungen in benachbarten Kammern gleich oder entgegengesetzt, vorzugsweise gleich, ist.

Das erfindungsgemäße Verfahren kann kontinuierlich oder diskontinuierlich betrieben werden.

Dem Fachmann erschließen sich weitere Verschaltungsmöglichkeiten, apparativer oder verfahrenstechnischer Art, die weitere Ausführungsarten des erfindungsgemäßen Verfahrens darstellen.

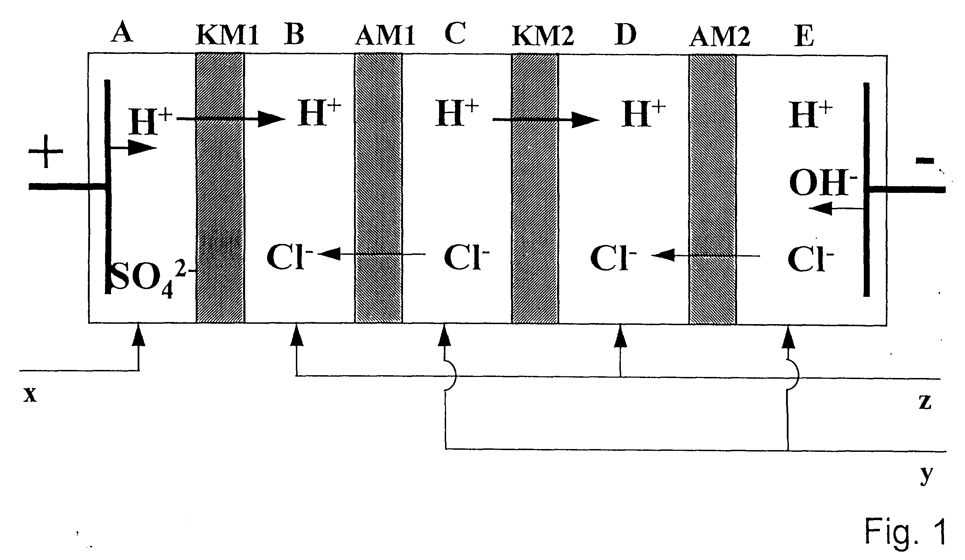

In Figur 1 ist beispielhaft eine Ausführungsart des erfindungsgemäßen Verfahrens zur Elektrodialyse dargestellt, ohne daß das Verfahren auf diese beschränkt ist.

Die dargestellte Elektrodialysezelle besteht aus einer Anode (+), die in der Anodenkammer **A** angebracht ist. In der Anodenkammer wird Schwefelsäure **x** vorgelegt. Die Anodenkammer ist von der benachbarten Kammer **B**, in welcher die zu konzentrierende Säure **z** vorgelegt wird, durch die Kationenaustauschermembran **KM1** getrennt. Die Kammer **B** wird von der Kammer **C**, in der die Chloridionen enthaltende Lösung **y** vorgelegt wird, durch die Anionentauschermembran **AM1** abgeteilt. Diese Kammer **C** ist wiederum von Kammer **D**, welche die gleiche Substanz wie Kammer **B** führt, durch eine Kationenaustauschermembran **KM2** getrennt. Zwischen Kammer **D** und der Kathodenkammer **E**, welche die Chloridionen enthaltende Lösung führt, ist die Anionenaustauschermembran **AM2** angebracht. In der Kathodenkammer befindet sich die Kathode, weiche mit - gekennzeichnet ist.

Bei angelegter Spannung wandern die Ionen in der in der Zeichnung durch Pfeile angegebenen Richtung. Die an der Anode entstehenden H⁺-Ionen wandern durch die Membran **KM1** in die Kammer **B**. Aus der Kammer **C** wandern Chlorid-Ionen durch die Anionenaustauschermembran **AM1** ebenfalls in die Kammer **B.** Aus der Kammer **C** wandern H⁺-Ionen durch die Kationenaustauschermembran **KM2** in die Kammer **D**, in welche auch Chlorid-Ionen aus der Kathodenkammer **E** durch die Membran **AM2** wandern.

In Figur 2 ist der zeitliche Verlauf der Konzentration an HCl in der zu konzentrierenden Säure (mit **l** gekennzeichnet) sowie in der Chloridionen enthaltenden Lösung (mit **m** gekennzeichnet), für die in Beispiel 1 beschriebene Elektrodialyse, aufgetragen. Die mit **k** gekennzeichnete, gestrichelte Linie kennzeichnet die Konzentration des Azeotrops Wasser/HCl.

In Figur 3 ist beispielhaft eine weitere Ausführungsart des erfindungsgemäßen Elektrodialyse-Verfahrens dargestellt, ohne daß das Verfahren auf diese beschränkt ist.

Die abgebildete Ausführungsart entspricht im wesentlichen der in Fig. 1 dargestellten Ausführungsart des erfindungsgemäßen Verfahrens. Der einzige Unterschied besteht darin, daß statt der Kationenaustauschermembranen (**KM1** und **KM2** in der Fig. 1) die bipolaren Membranen **B11** und **B12** zur Trennung der Kammern **A** und **B** bzw **C** und **D** eingesetzt werden.

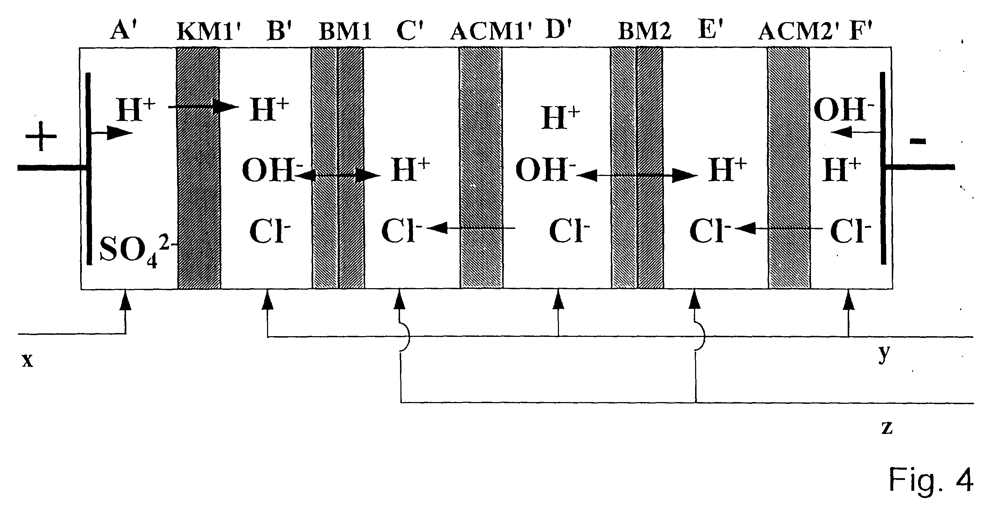

In Figur 4 ist beispielhaft eine weitere Ausführungsart des erfindungsgemäßen Elektrodialyse-Verfahrens dargestellt, ohne daß das Verfahren auf diese beschränkt ist.

Die dargestellte Elektrodialysezelle weist eine Anodenkammer **A'**, in der die Schwefelsäure **x** vorgelegt wird und welche die Anode (+) enthält, auf. Die Anodenkammer **A'** ist von der benachbarten Kammer **B'**, in welcher die Chloridionen enthaltende Lösung **y** vorgelegt wird, durch eine Kationenaustauschermembran **KM1'** getrennt. Diese Kammer **B'** ist von der folgenden Kammer **C'**, in welcher die zu konzentrierende Säure **z** vorgelegt wird, durch eine bipolare Membran **BM1** getrennt. Kammer **C'** ist von Kammer **D'**, welche die Chloridionen enthaltende Lösung führt, durch eine Anionenaustauschermembran **ACM1'** getrennt. Kammer **D'** ist wiederum von Kammer **E'** durch eine bipolare Membran **BM2** gtrennt. Die Kathodenkammer **F'**, in welcher die Kathode (-) installiert ist, ist von der Kammer **E'** durch die Anionenaustauschermembran **ACM2'** abgetrennt.

Bei angelegter Elektrodialysespannung wandern H⁺-Ionen durch die Membran **KM1'** von der Kammer **A'** in die Kammer **B'**. Aus den Kammern **F'** bzw. **D'** wandern Chloridionen durch die Anionenaustauschermembranen **ACM2'** bzw. **ACM1'** in die Kammern **C'** bzw. **E'**. In den bipolaren Membranen **BM1** und **BM2** wird Wasser in OH⁻-Ionen und H⁺-Ionen gespalten, wobei die OH⁻-Ionen in die Kammern **B'** und **D'** und die H⁺-Ionen in die Kammern **C'** und **E'** wandern.

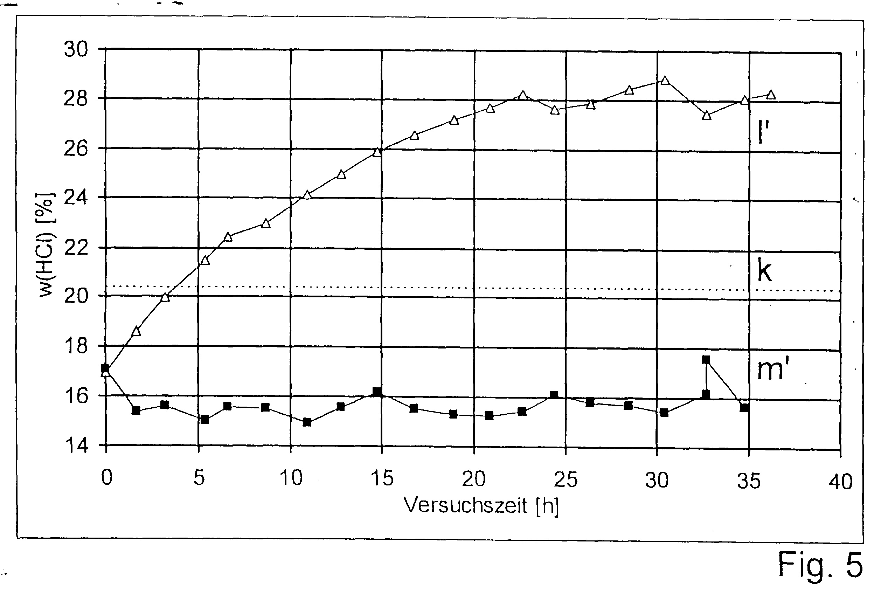

In Fig. 5 ist der zeitliche Verlauf der Konzentration in der Chloridionen enthaltenden Lösung (mit **m'** gekennzeichnet) und der zeitliche Verlauf der Konzentration in der zu konzentrierenden Säure (mit **l'** gekennzeichnet), für die in Beispiel 2 beschriebene Elektrodialyse, aufgetragen. Die mit **k** gekennzeichnete, gestrichelte Linie kennzeichnet die Konzentration des Azeotrops Wasser/HCl.

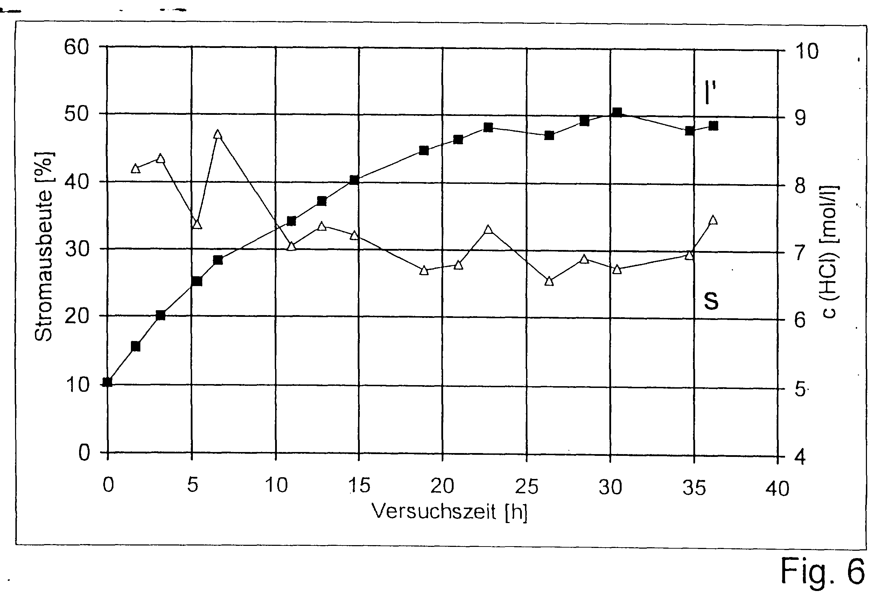

In Fig. 6 ist der zeitliche Verlauf der Konzentration an HCl in der zu konzentrierenden Säure (mit **l'** gekennzeichnet), sowie der zeitliche Verlauf der Stromausbeute (mit **s** gekennzeichnet), für die in Beispiel 2 beschriebene Elektrodialyse, aufgetragen.

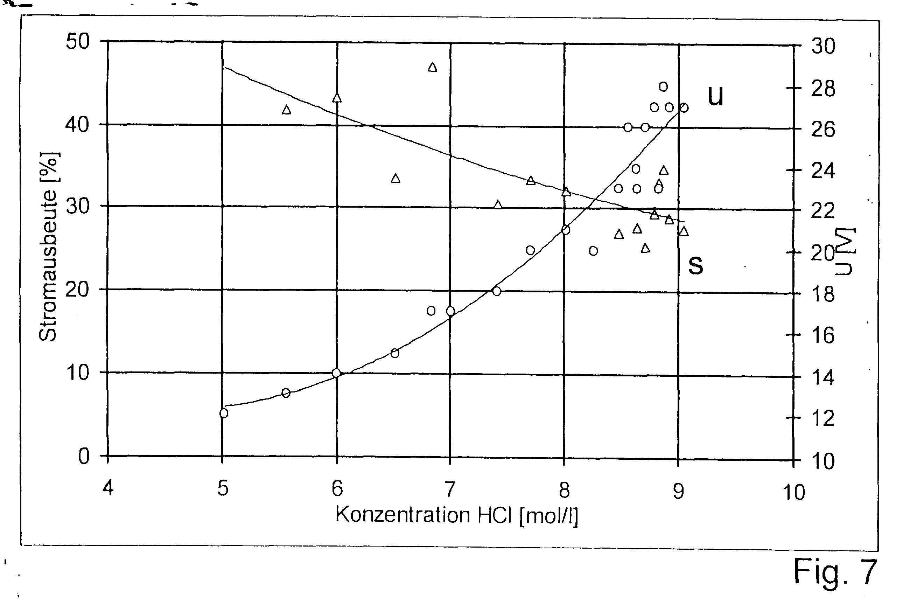

In Fig. 7 ist die Stromausbeute (mit **s** gekennzeichnet) und die angelegte Spannung (mit **u** gekennzeichnet) gegen die Konzentration an HCl in der zu konzentrierenden Säure, für die in Beispiel 2 beschriebene Elektrodialyse, aufgetragen.

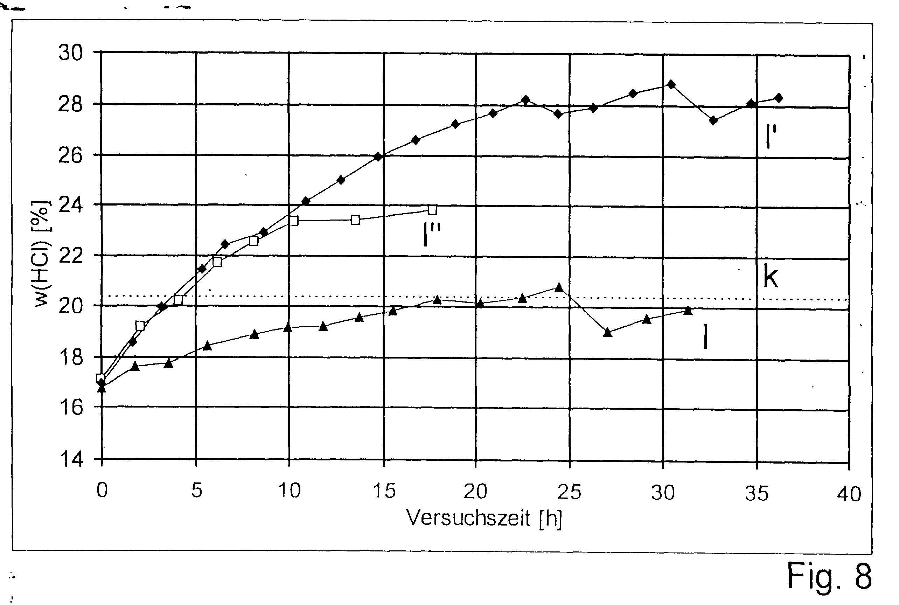

In Fig. 8 ist der zeitliche Verlauf der Konzentration an HCl in der zu konzentrierenden Säure, für die in Beispiel 1 (mit **l** gekennzeichnet), 2 (mit **l'** gekennzeichnet) und 3 (mit **l''** gekennzeichnet) beschriebenen Elektrodialysen, aufgetragen.

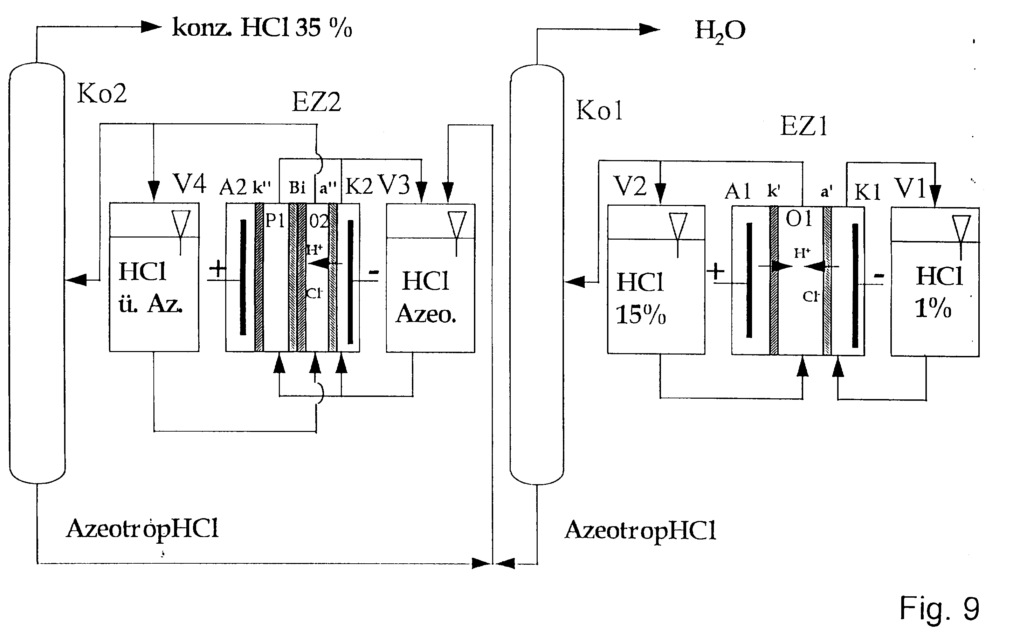

In Fig. 9 ist beispielhaft eine Ausführungsart des erfindungsgemäßen Verfahrens dargestellt, wobei das beanspruchte Verfahren nicht auf diese beispielhafte Ausführungsart beschränkt werden soll.

Die dargestellte Ausführungsart eignet sich insbesondere zur Herstellung von konzentrierter Salzsäure aus verdünnter, evtl. verunreinigter Salzsäure mit einer Konzentration von 1 Gew.-%. Diese als Dünnsäure bezeichnete Säure wird aus Vorlage **V1** im Kreis in die Kathodenkammer **K1** der Elektrodialysezelle **EZ1** geführt. Diese Kammer wird von der die durch die Elektrodialyse auf 15 Gew-% konzentrierte Salzsäure enthaltenden Kammer **O1** durch eine Anionenaustauschermembran **a'** getrennt. Die Kammer **O1**, durch welche die 15 gew.-%ige Säure aus der Vorlage **V2** im Kreis geführt wird, ist von der Anodenkammer **A1** durch die Kationenaustauschermembran **k'** getrennt.

Ein Teil der im Kreis geführten, durch Elektrodialyse auf 15 Gew.-% konzentrierten Salzsäure wird abgenommen und durch weniger konzentrierte Säure ersetzt. Die abgenommene Säure wird seitlich in eine Kolonne **Ko1** gefahren, in der die Säure rektifiziert wird. Am Kopf der Kolonne wird Wasser abgenommen. Die am Fuß der Kolonne abgenommmene Säute, welche die Azeotropkonzentration aufweist, wird in die Vorlage **V3** gespeist.

Aus der Vorlage **V3** wird die ca. 20,17 Gew -%ige Säure in die Kathodenkammer **K2** einer weiteren Elektrodialysezelle **EZ2** sowie in die Kammer **P1** vorgelegt. Die Kammer **K2** ist von der Kammer **O2**, welche Säure, die durch die Elektrodialyse eine Konzentration über der Konzentration des Wasser/Säure-Azeotrops aufweist, enthält, durch die Anionenaustauschermembran **a''** getrennt. Die Kammer **O2**, in welcher die Säure, welche eine höhere Konzentration als die Wasser/Säure-Azeotrop-Konzentration aufweist, aus der Vorlage **V4** vorgelegt wird, ist von der Kammer **P1** durch die bipolare Membran **Bi** getrennt. Die Kammer **P1** ist durch eine Kationenaustauschermembran **k''** von der Anodenkammer **A2**, welche Schwefelsäure enthält, getrennt. Aus dem Kreislauf, welcher **V4** und **O2** verbindet, wird ein Teil der Säure mit einer Konzentration über der Wasser/Säure-Azeotrop-Konzentration (HCl ü. Az.) seitlich in eine Kolonne **Ko2** gefahren. In dieser Kolonne wird die eingespeiste Säure durch Rektifikation in konzentrierte Säure, welche am Kopf der Kolonne abgenommen wird und in Säure mit Azeotrop-Konzentration, welche am Sumpf der Kolonne abgenommen wird, aufgespalten. Die am Sumpf der Kolonne abgenommene Säure wird wieder in die Vorlage **V3** eingespeist.

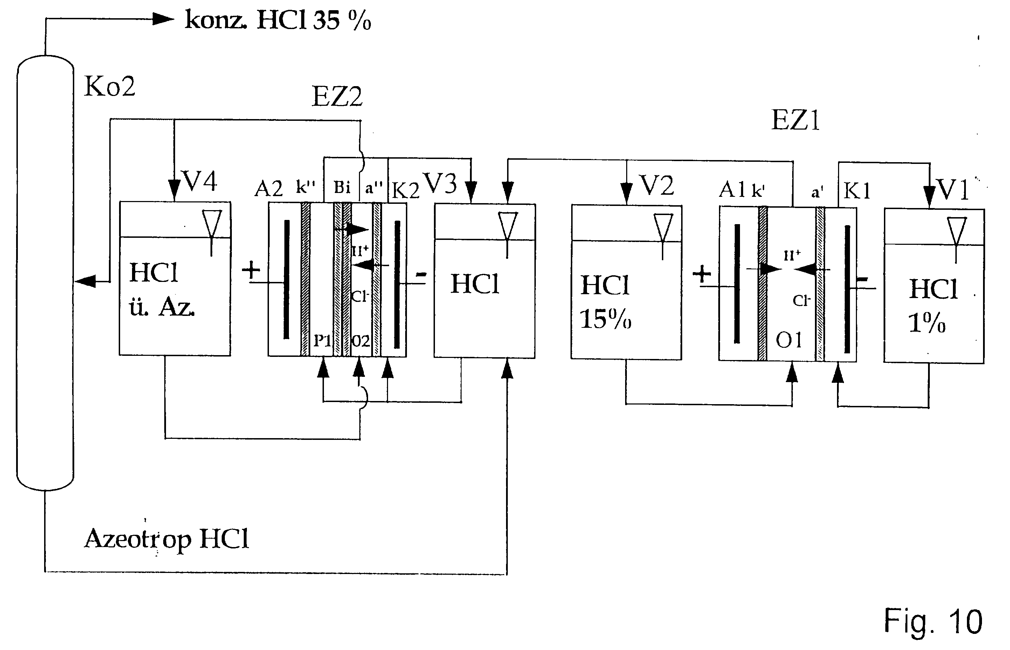

In Fig. 10 ist beispielhaft eine weitere Ausführungsart des erfindungsgemäßen Verfahrens dargestellt, wobei das beanspruchte Verfahren nicht auf diese beispielhafte Ausführungsart beschränkt werden soll.

Bei dieser besonderen Ausführungsart des erfindungsgemäßen Verfahrens werden wie bei der in Fig. 9 dargestellten Ausführungsart wiederum zwei Elektrodialysezellen **EZ1** und **EZ2** eingesetzt. Die Ausrüstung der Elektrodialysezellen entspricht denen in Fig. 9. Im Gegensatz zur in Fig. 9 beschriebenen Ausführungsart, wird bei der vorliegenden Ausführungsart auf die Kolonne **Ko1** verzichtet. Statt dessen wird ein Teil der aus der Elektrodialysezelle **EZ1** gewonnenen, ca. 15 Gew.-%igen Salzsäure direkt in die Vorlage V3 der Elektrodialysezelle **EZ2** gefahren.

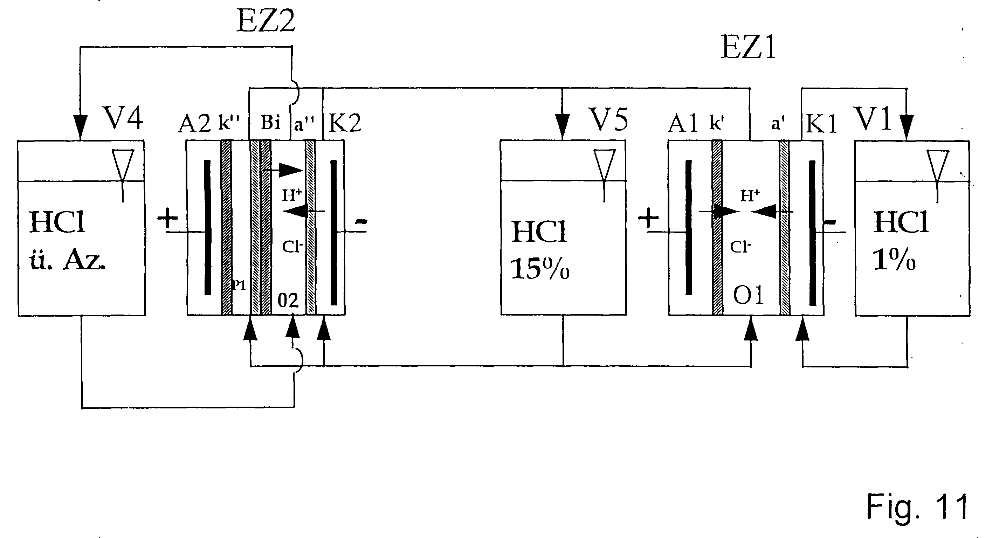

In Fig. 11 ist beispielhaft eine weitere Ausführungsart des erfindungsgemäßen Verfahrens dargestellt, wobei das beanspruchte Verfahren nicht auf diese beispielhafte Ausführungsart beschränkt werden soll.

Bei dieser besonderen Ausführungsart des erfindungsgemäßen Verfahrens werden wiederum zwei Elektrodialysezellen **EZ1** und **EZ2** eingesetzt. Im Unterschied zur in Fig. 10 dargestellten Ausführungsart des erfindungsgemäßen Verfahrens wird bei der vorliegenden Ausführungsart auf die Kolonne **Ko2** verzichtet, daß heißt, daß das Endprodukt dieser Ausführungsart keine konzentrierte Salzsäure ist, sondern Salzsäure, deren Konzentration über der Azeotropkonzentration liegt. Zudem wird bei der in Fig. 11 dargestellten Ausführungsart auf die Vorlagen **V2** und **V3**, dargestellt in Fig. 10, verzichtet. Stattdessen wird eine Vorlage **V5** eingesetzt, aus der sowohl der Kreislaut welcher durch die Kammern **A2** und **O1** geführt wird, als auch der Kreislauf, der durch die Kammer **P1** geführt wird, gespeist wird. Die Konzentration der Salzsäure in der Vorlage **V5** beträgt ungefähr 15 Gew.-% HCl.

Das erfindungsgemäße Verfahren wird durch die folgenden Beispiele näher erläutert, ohne darauf beschränkt zu sein. Als Membranen und Elektroden wurden in den Beispielen die in Tabelle 1 aufgeführten Membran- und Elektrodentypen verwendet.

**Tabelle 1**

| Membran- und Elektrodentypen | | |
|---|---|---|
| | | Hersteller |
| Bipolare Membran | BP1 | Tokuyama Soda |
| Anionenaustaushermembran | ACM | Tokuyama Soda |
| Kationenaustauschermembran | C66 10F | Tokuyama Soda |
| Anode | Titan mit Mischoxidüberzug | |
| Kathode | VA-Stahl | |

### Beispiel 1:

In einer wie in Fig. 1 dargestellten Elektrodialysezelle, die durch jeweils zwei Anionen- und Kationenaustauschermembranen in fünf Kammern unterteilt war, wurde in der Anodenkammer eine 5 Gew.-%ige Schwefelsäure vorgelegt. Durch ständiges Nachliefern frischer Säure wurde die Konzentration der Schwefelsäure in der Anodenkammer weitgehend konstant gehalten. In der zweiten Kammer, die von der Anodenkammer durch eine Kationenaustauschermembran getrennt war und in der vierten Kammer, die von der Kathodenkammer durch eine Anionenaustauschermembran getrennt war, wurden 500 cm³ der zu konzentrierenden Säure, deren Anfangskonzentration 4,5 mol/l betrug vorgelgt. In der Kathodenkammer sowie in der mittleren Kammer, die von den beiden die zu konzentrierende Säure enthaltenden Kammern durch eine Anionenaustauschermembran und eine Kationenaustauschermembran getrennt wurde, wird eine Salzsäure vorgelegt, deren Anfangskonzentration ebenfalls 4,5 mol/l betrug.

Die Elektrodialyse wurde 32 h bei einer Temperatur von 20 bis 25 °C bei einer Stromdicht von 100 mA/cm² durchgeführt.

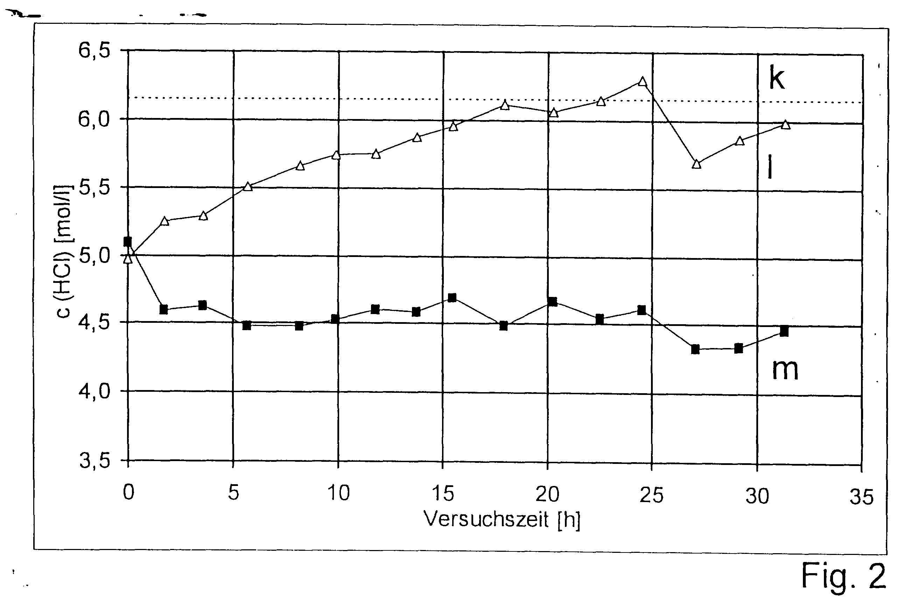

Der in Fig. 2 dargestellten Grafik läßt sich entnehmen, daß die Konzentration der zu konzentrierenden Säure sich in der Nähe bzw. oberhalb der Azeotrop-Konzentration einpendelt. Auch bei längerer Elektrodialyse läßt sich eine wesentliche Konzentrationssteigerung nicht mehr feststellen.

Die Ausführungsart des erfindungsgemäßen Verfahrens ohne Verwendung einer bipolaren Membran ermöglicht es also, die zu konzentrierende Säure auf eine Konzentration oberhalb der Azeotropkonzentration zu konzentrieren. Diese so aufkonzentrierte Säure kann dann z.B. durch Destillation auf eine höhere Konzentration gebracht werden, nicht jedoch durch eine verlängerte Elektrodialysezeit.

### Beispiel 2:

In einer wie in Fig. 4 dargestellten Elektrodialysezelle, die sechs Kammern aufweist, wobei die Anodenkammer von der anschließenden Kammer durch eine Kationenaustauschermembran getrennt wird, diese Kammer von der nächsten Kammer durch eine bipolare Membran getrennt wird, jene Kammer von der nächsten Kammer durch eine Anionenaustauschermembran getrennt wird, diese von der nächsten Kammer wiederum durch eine bipolare Membran getrennt wird und diese Kammer von der Kathodenkammer durch eine Anionenaustauschermembran getrennt wird, wird eine Elektrodialyse durchgeführt. Die Anodenkammer enthält wie in Beispiel 1 eine 5 Gew.-%ige Schwefelsäure. Die zweite und vierte Kammer sowie die Kathodenkammer werden jeweils von einer Vorlage gespeist, in der eine 17 Gew.%ige Salzsäure vorgelegt wird. Im Verlauf der Elektrodialyse wird soviel Säure nachdosiert, daß die Konzentration der Säure bei 15 Gew.-% konstant gehalten wurde. In der dritten und fünften Kammer wird die zu konzentrierende Säure vorgelegt.

Die Elektrodialyse wurde mit einer Anfangsspannung von 12 Volt bei einer Stromdichte von 100 mA/cm² gestartet. Im Verlauf der 36-stündigen Elektrodialyse stieg die Spannung auf 26 Volt an. Die Stromdichte ist über den gesamten Elektrodialyseverlauf konstant gehalten worden.

Wie in Fig. 5 dargestellt, steigt im Verlauf der Elektrodialyse die Konzentration im die zu konzentrierende Säure enthaltenen Kreislauf auf bis zu 28 Gew.-% an. Auch durch längere Elektrodialysezeit wird diese Konzentration nicht wesentlich überschritten.

Fig. 6 ist zu entnehmen, daß die Stromausbeute bei diesem Beispiel bei ca. 30 % lag. Fig. 7 zeigt die Stromausbeute und die Spannung aufgetragen gegen die Konzentration der zu konzentrierenden Säure. Fig. 8 zeigt einen Vergleich der erhaltenen Konzentrationen der zu konzentrierenden Säure bei Anwendung der unterschiedlichen Ausführungsarten des erfindungsgemäßen Verfahrens.

### Beispiel 3

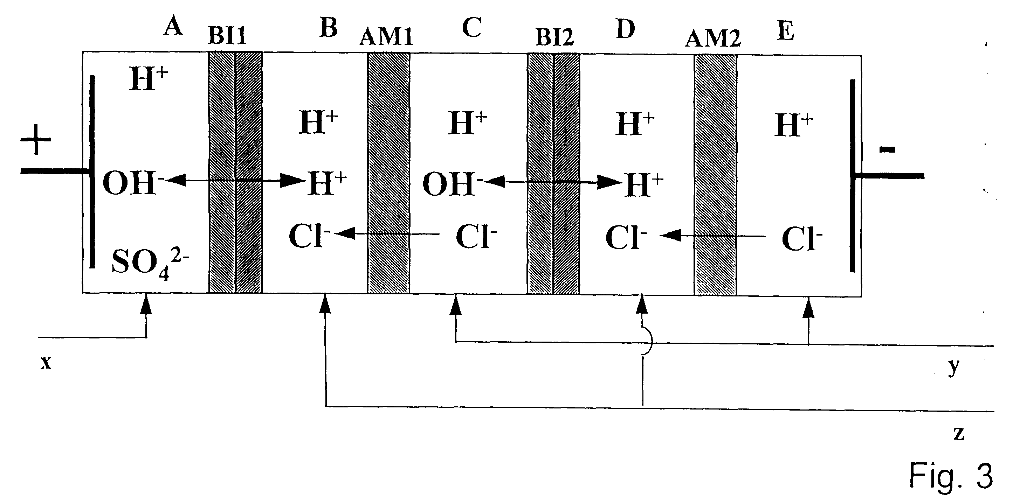

In einer wie in Fig. 3 dargestellten Elektrodialysezelle, die durch jeweils zwei Anionenaustauschermembranen ACM der Firma Tokuyama Soda und zwei bipolare Membranen BP1 der Firma Tokuyama Soda in fünf Kammern unterteilt war, wurde in der Anodenkammer eine 15 Gew.-%ige Schwefelsäure vorgelegt. Durch ständiges Nachliefern frischer Säure wurde die Konzentration der Schwefelsäure in der Anodenkammer weitgehend konstant gehalten. In der zweiten Kammer, die von der Anodenkammer durch eine bipolare Membran getrennt war und in der vierten Kammer, die von der Kathodenkammer durch eine Anionenaustauschermembran getrennt war, wurden 660 cm³ der zu konzentrierenden Säure, deren Anfangskonzentration 4,5 mol/l betrug vorgelegt. In der Anodenkammer sowie in der mittleren Kammer, die von den beiden die zu konzentrierende Säure enthaltenden Kammern durch eine Anionenaustauschermembran bzw. eine bipolare Membran getrennt wurden, wurde eine Salzsäure vorgelegt, deren Anfangskonzentration ebenfalls 4,5 mol/l betrug.

Die Elektrodialyse wurde bei einer Temperatur von 25 bis 30 °C mit einer angelegten Spannung von 10 bis 11 Volt und einer Stromstärke von 10 Ampere durchgeführt. Gegen Ende der Elektrodialyse wurde die Stromstärke verringert, um eine thermische Schädigung der Membran zu verhindern. Nach 16 h mußte die Elektrodialyse abgebrochen werden, da die verwendete bipolare Membran zerstört war.

Die Fig. 8 zeigt einen Vergleich der Konzentrationsverläufe der zu konzentrierenden Säure bei Anwendung der unterschiedlichen, in den drei Beispielen beschriebenen. Ausführungsarten des erfindungsgemäßen Verfahrens. Es ist deutlich zu erkennen, daß es mit der in Beispiel 1 dargestellten Ausführungsart des erfindungsgemäßen Verfahrens möglich ist, Salzsäure mit einer Konzentration über der Konzentration des Wasser/HCl-Azeotrops herzustellen. Desweiteren ist zu erkennen, daß mit den in den Beispielen 2 und 3 dargestellten Versuchsbedingungen eine Salzsäure mit einer Konzentration erhalten werden kann, die deutlich über der Konzentration des Wasser/HCl-Azeotrops liegt.

## Patentansprüche

1. Verfahren zur Herstellung von Salzsäure mit Konzentrationen über der Konzentration des Wasser/HCl-Azeotrops,
dadurch gekennzeichnet,
daß das Konzentrieren der Salzsäure durch zumindest einen elektodialytischen Schritt erfolgt.

2. Verfahren nach Anspruch 1,
dadurch gekennzeichnet,
daß der elektrodialytische Schritt in zumindest einer Elektrodialysezelle, die zumindest eine Kationenaustauschermembran und zumindest eine Anionenaustauschermembran aufweist, erfolgt.

3. Verfahren nach Anspruch 1,
dadurch gekennzeichnet,
daß der elektrodialytische Schritt in zumindest einer Elelctrodialysezelle, die zumindest eine Anionenaustauschermembran und zumindest eine bipolare Membran aufweist, erfolgt.

4. Verfahren nach Anspruch 1,
dadurch gekennzeichnet,
daß der elektrodialytische Schritt in zumindest einer Elektrodialysezelle, die zumindest eine Kationenaustauschermembran, zumindest eine Anionenaustauschermembran und zumindest eine bipolare Membran aufweist, erfolgt.

5. Verfahren nach zumindest einem der Ansprüche 1 bis 4,
dadurch gekennzeichnet,
daß die Anodenkammer der Elektrodialysezelle mit einer Säure gespeist wird.

6. Verfahren nach zumindest einem der Ansprüche 1 bis 5,
dadurch gekennzeichnet,
daß die in die Anodenkammer eingespeiste Säure eine Konzentration von 0,01 bis 20 Gew.-% aufweist.

7. Verfahren nach zumindest einem der Ansprüche 1 bis 6,
dadurch gekennzeichnet,
daß die Anodenkammer der Elektrodialysezelle mit Schwefelsäure gespeist wird.

8. Verfahren nach zumindest einem der Ansprüche 1 bis 7,
dadurch gekennzeichnet,
daß die Anode der Elektrodialysezelle aus zumindest einem Material, ausgewählt aus einer Gruppe von Materialien, die Platinmohr, Titan, Graphit, Mischoxid, reines Platin, Edelmetalle, Metalle, eine Kombination dieser Materialien, auf Träger aufgebrachte Kombinationen dieser Materialien und Titan mit Mischoxidüberzug umfaßt, besteht.

9. Verfahren nach zumindest einem der Ansprüche 1 bis 8,
dadurch gekennzeichnet,
daß die Kathode der Elektrodialysezelle aus zumindest einem Material, ausgewählt aus einer Gruppe von Materialien, die Platinmohr, Stahl, Edelstahl, VA-Stahl, Graphit, Mischoxid, reines Platin, Edelmetalle, Metalle, eine Kombination dieser Materialien, auf Träger aufgebrachte Kombinationen dieser Materialien und Titan mit Mischoxidüberzug umfaßt, besteht.

10. Verfahren nach zumindest einem der Ansprüche 1 bis 9,
dadurch gekennzeichnet,
daß die zu konzentrierende Salzsäure eine Ausgangskonzentration von 8 bis 20,17 Gew.-% aufweist.

11. Verfahren nach Anspruch 10,
dadurch gekennzeichnet,
daß die zu konzentrierende Säure eine Ausgangskonzentration von 12 bis 20,17 Gew.-% aufweist.

12. Verfahren nach zumindest einem der Ansprüche 1 bis 11,
dadurch gekennzeichnet,
daß zum Erhalt einer konzentrierten Salzsäure nach der Konzentration durch zumindest einen elektrodialytischen Schritt eine thermische Behandlung durchgeführt wird.

13. Verfahren nach Anspruch 12,
dadurch gekennzeichnet,
daß die thermische Behandlung eine Rektifikation ist.

14. Verfahren nach zumindest einem der Ansprüche 1 bis 13,
dadurch gekennzeichnet,
daß die zu konzentrierende Säure aus verdünnter Säure mit einer Konzentration von 0,01 bis 10 Gew.-% hergestellt wird.

15. Verfahren nach Anspruch 14,
dadurch gekennzeichnet,
daß die verdünnte Säure verunreinigt ist.

16. Verfahren nach zumindest einem der Ansprüche 1 bis 15,
dadurch gekennzeichnet,
daß die zu konzentrierende Säure durch Elektrodialyse hergestellt wird.

17. Verfahren nach zumindest einem der Ansprüche 1 bis 16,
dadurch gekennzeichnet, daß die zu konzentrierende Säure durch eine thermische Behandlung hergestellt wird.

18. Verfahren nach Anspruch 17,
dadurch gekennzeichnet,
daß die thermische Behandlung eine Rektifikation ist.

19. Verfahren nach Anspruch 17,
dadurch gekennzeichnet,
daß die thermische Behandlung eine Destillation ist.

20. Verfahren nach zumindest einem der Ansprüche 1 bis 19,
dadurch gekennzeichnet,
daß als zu konzentrierende Säure eine Säure eingesetzt wird, die als Sumpfprodukt bei der thermischen Behandlung einer Säure mit einer über der Azeotropkonzentration liegenden Konzentration erhalten wird.
